# EUROPEAN PATENT APPLICATION

(11) **EP 4 021 046 A1**
(43) Date of publication of application: **29.06.2022**
(21) Application number: 20383161.5
(22) Date of filing: 24.12.2020
(51) Int. Cl.: H04W 12/06, H04W 12/63, H04W 12/68, H04W 12/61, H04W 12/10, H04L 29/06

(54) **LOCATION-BASED METHOD FOR THE ELECTRONIC IDENTITY VERIFICATION OF A USER, DEVICE, SYSTEM, COMPUTER-READABLE MEDIUM AND COMPUTER PROGRAM PRODUCT IMPLEMENTING SAID METHOD**

(71) Applicant: Lleidanetworks Serveis Telemàtics, S.A., 25003 Lleida (ES)
(72) Inventor: SAPENA, FRANCISCO, 25003 LLEIDA (ES); SORRIBES, JORDI, 25003 LLEIDA (ES)

(57) **Abstract**

The invention relates to a location-based method for electronic identity verification of a user, comprising the steps of i) tracking a location pattern of the user whose identity is to be verified, wherein the location pattern comprises information for identifying a first plurality of physical locations of the user; and ii) requesting electronic identity data of the user. Advantageously, the method further comprises the steps of iii) analysing a second plurality of locations of the user, and obtaining a similarity result and comparing it with a predefined threshold result; and iii) verifying the identity of the user if the similarity result fulfils the condition imposed by the threshold result. The invention further relates to a device, a system, a computer-readable medium and a computer program product implementing said method.

## Description

### FIELD OF THE INVENTION

The present invention relates to a method for the electronic identity verification of users which is based on the analysis of the physical locations of said users. More specifically, the method of the invention can be used for authorising or validating a digital signature of documents, issuing electronic certificates, or for validating any type of electronic operation or transaction, by verifying the identity of a user analysing his/her/its location. The invention also relates to a device, a system, a computer-readable medium and a computer program product implementing said method.

### BACKGROUND OF THE INVENTION

The signature of a legal instrument such as an agreement between parties, a purchase contract, a power of attorney, etc., may require several actions designed to attest to the authenticity of the signature of a document. Such actions may include verifying that a party authorizing the instrument is really the person who is entitled to make such an authorization, and subsequent signing of the instrument. While this sort of verification is achieved in a relatively straightforward manner when the execution of the instrument is being done physically, in person, it becomes significantly more difficult when the signatures are done remotely, electronically, or through distributed systems. This problem applies not only to legal instruments but, in general, to any electronic transaction or operation between entities wherein the identity of one of said entities needs to be verified.

In this context, when the execution of a document, transaction or operation is done remotely through electronic means, one must be able to securely verify that any of the parties is who he/she/it is claiming to be.

A technical problem with verifying the identity of a party during an electronic operation, especially one that requires corroboration of the operation's signature, is the authentication of the parties to the operation's execution, and the verification that said parties are physically present in a given location during the execution of the operation. This is particularly true for electronic signatures where the execution action is performed remotely and/or via a distributed system. In such instances of remote execution, it is common to have minimal levels of authentication, such as having the signing party use a username and a password to enter into a web-portal through which it may then execute the document. Such a single level of authentication is relatively easy to defeat. The implementation of multiple levels of authentication may be beneficial to prevent unauthorised parties from executing such an electronic operation in the place of the authorised party. However, existing technology and practices are deficient in providing secure location-based verification through electronic mechanisms. Existing technologies principally rely upon two-factor verification techniques, such as the possession of a physical device which is expected to be at a particular location, coupled with knowledge of a device PIN or password. However, with the rise of mobile devices whose location can vary in time, these verification techniques can also be easily defeated. Some further verification techniques may additionally determine the location of a device, rejecting the completion of the electronic operation in case that said location does not correspond to a reference location previously defined. Some further verification techniques may rely upon biometrics or text, voice, image, or video verification, individually or in combination.

The present invention is presented as a solution to the aforementioned problem of the prior art, by proposing a novel method for the electronic identity verification of a user, which improves the known techniques for analysing the location of said user. The invention also relates to a device, a system, a computer-readable medium and a computer program product adapted for implementing said method.

### SUMMARY OF THE INVENTION

A first object of the present invention relates, without limitation, to a location-based method for the electronic identity verification of a user, wherein said method comprises the following steps, in any technically possible order:
- tracking one or more location patterns of the user whose identity is to be verified, wherein each location pattern comprises information for identifying a first plurality of physical locations of the user, and wherein the first plurality of physical locations defines a route or path;
- requesting an electronic identity data of the user;
- analysing a second plurality of physical locations of the user;
- comparing said locations with one or more of the location patterns, determining the similarity between the second plurality of locations and the first plurality of locations defining the location patterns, obtaining a similarity result, and comparing it with a predefined threshold result; and
- verifying the identity of the user by means of the electronic data of the user only when the similarity result fulfils a condition imposed by the threshold result.

Thanks to this method, the plurality of physical locations of the user can be compared with a reference location pattern, thereby determining if said physical locations match the patterned ones. The analysed time period for defining the location patterns can be as long and detailed as desired, thus allowing to identify any entity trying to impersonate the user in case that said entity has not moved following the analysed patterns.

In a preferred embodiment of the invention, the method further comprises the steps of:
- requesting the electronic signature of a document and/or an electronic transaction;
- allowing and/or validating the electronic signature of the document and/or the electronic transaction if the identity of the user is verified.

Thus, a user requesting the electronic signature of a document can advantageously use a location-based identity verification method in order to accept, reject and/or validate said electronic signature.

In a further preferred embodiment of the invention, the location pattern comprises at least one of: geolocation data, mobile phone network tracking data, Internet, Wi-Fi, and beaconing data.

In a further preferred embodiment of the invention, the location patterns are established by determining recurrent routes or paths followed by the user in a given timeframe. More preferably, the method further comprises a step of analysing the change in the locations of the user along said routes or paths.

In a further preferred embodiment of the invention, the method further comprises a step of tracking one or more location patterns with corresponding timestamps related to the physical locations of the user. More preferably, the step of comparing the location of the user with the locations of one or more of the location patterns further comprises a substep of comparing the corresponding timestamps for said locations with the timestamps associated to one or more of the location patterns.

In a further preferred embodiment of the invention, one or more of the location patterns comprise one or more verification request locations, corresponding to one or more locations and/or timestamps where/when the user is allowed to request for the verification of identity, wherein the method further comprises a step of comparing the current location of the user with one or more of the verification request locations.

In a further preferred embodiment of the invention, the request for identity verification is submitted by the user. Alternatively, the request for identity verification is submitted by a third party.

In a further preferred embodiment of the invention, the step of verifying the identity of the user comprises at least one of: biometric verification, an ID and/or password verification, and a text/voice/image/video verification.

In a further preferred embodiment of the invention, the step of analysing a plurality of locations of the user and comparing them with one or more location patterns comprises, additionally, comparing said locations with predefined routes or paths based on data associated to a virtual representation of a physical space. For example, said virtual representation can correspond to a map or a plan representing said physical space.

In a further preferred embodiment of the invention, the step of comparing the second plurality of physical locations of the user with one or more of the location patterns is carried out prior to the verification of his/her/its identity.

A further object of the invention relates to a non-transitory computer readable medium having stored therein instructions that, when executed by at least one processor, cause the at least one processor to perform a method according to any of the embodiments described herein.

A further object of the invention relates to a device for electronically verifying the identity of a user based on his/her/its location, said device comprising:
- a processor;
- means for identifying the location of the device;
- a non-transitory computer readable medium according to any of the embodiments described herein.

In a preferred embodiment of the invention, the device further comprises means for digitally signing an electronic document.

A further object of the invention relates to a system for electronically verifying the identity of a user based on his/her/its location, said system comprising:
- at least a client device comprising:
   -- a processor;
   -- means for identifying the location of the client device;
   -- communication means in order to communicate with one or more servers;
- at least a server comprising a processor and connected to the client device through a data network;
wherein at least one of the client device or the server comprises a non-transitory computer readable medium according to any of the embodiments described herein.

A further object of the invention relates a computer-program product comprising a non-transitory computer readable medium according to any of the embodiments described herein.

### DESCRIPTION OF THE DRAWINGS

Figure 1 shows a schematic representation of the steps comprised in the method of the invention, according to a first embodiment thereof applied to the electronic signature of a document.
Figure 2 shows a schematic representation of the steps comprised in the method of the invention, according to a second embodiment thereof applied to the electronic signature of a document.

### DETAILED DESCRIPTION OF THE INVENTION

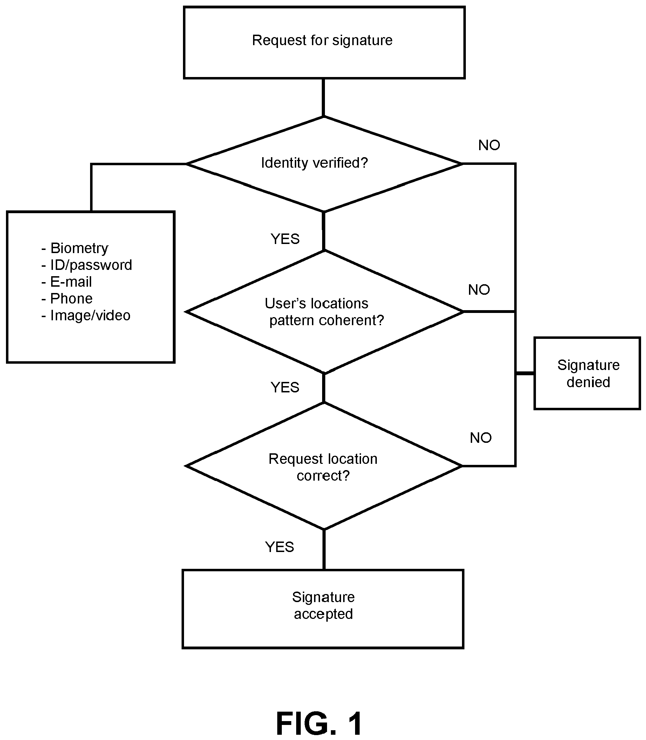

Different preferred embodiments of the invention, provided for illustrating but non-limiting purposes, are described below referring to Figures 1-2 of the present document.

Figure 1 describes the main steps of the method proposed by the present invention, in a first preferred embodiment thereof. Even though the method is referred to the signature validation of an electronic document, in different embodiments of the invention it can be generally applied to any process where the identity of a user must be verified. Furthermore, the steps of the method described in the following paragraphs can be executed in any technically possible order within the scope of the invention, without limitation. In this sense, the reference to a "first step", "second step", etc. should not be understood as imposing any restrictive order to the method of the invention. Moreover, even though the embodiments of the invention will be generally referred to the identity verification of a user, it is to be noted that the expression "user" will be understood as applied not only to a human user, but also to any robotic or physical entity whose identity needs to be verified and whose physical location can vary in time.

The method of the invention requires, as a first step, tracking one or more location patterns of the user whose identity is to be verified, wherein each location pattern comprises typically a dataset for identifying a plurality of physical locations of the user. In different embodiments of the invention, the location pattern can comprise geolocation data (for example, through satellite positioning), mobile phone network tracking data (for example, through triangulation of cell tower signals), Internet, Wi-Fi or beaconing data (for example, through the IP address of one or more routers to which the user is connected), as well as any means for determining the location of the user during a given timeframe, by means of any technical means which allow defining said location patterns though electronic exchange of data.

The location patterns can be established, for instance, by determining recurrent routes or paths followed by the user in a given timeframe, as well as by analysing the change in the location of the user along said routes or paths. In a first example, a route can be established between the user's home and the user's working place, by combining Wi-Fi and mobile connection data which can be acquired by the user's mobile phone. In a second example, the route or path can be established for the daily delivery points of a parcel service, by means of an embarked communications system installed in a vehicle. By analysing the location of the user, as well as optionally tracking the timestamp associated to said location, typical routes or paths corresponding to the most frequent locations and times associated to the user can be determined. Thus, the location patterns will preferably comprise data associated to one or more of those routes/paths followed by the user.

The start of the periods or timeframes used for defining the location patterns can be triggered by different events, such as a user's login in a device, the introduction of a password (for example, a PIN for activating a SIM card in a mobile phone), etc. Thereby, the location patterns can be associated to a specific user's identity within an electronic device, or within a communication network.

Other data comprised in the location patterns can include, in different embodiments of the invention, one or more verification request locations, corresponding to one or more locations and/or timestamps where/when the user is allowed to request for a verification of identity or to sign a document.

In order to sign an electronic document, a second step of the method comprises a request for the identity verification of the user. This request for identity verification can be submitted by the user him/her/itself, as well as by any third party. The step of verifying the identity of the user can be based on any known identity verification or authentication means, such as biometric verification, ID and/or password verification, or text/voice/image/video verification. Particular examples of this verification in different embodiments of the invention can comprise sending an e-mail or requesting the identification of the user on the phone, among others. These authentication means can be used individually or in combination in further embodiments of the invention.

A third step of the method of the present invention comprises analysing a plurality of locations of the user and, optionally, of associated timestamps and/or velocities for a given period of time, preferably prior to the verification of his/her/its identity, and comparing said locations and timestamps with the locations and timestamps of one or more of the location patterns defined in the first step. The comparison will preferably comprise determining the similarity between said plurality of locations/timestamps and the chosen location patterns, obtaining a similarity result and comparing it with a predefined threshold result. If the similarity result fulfils the condition imposed by the threshold, then it will be established that the user has performed a "coherent" set of movements according to the chosen location pattern. Therefore, the user will be allowed to verify his/her/its identity or, depending on the specific embodiment of the invention, the document will be approved for its signature, the signature will be validated, or the transaction will be allowed for its completion.

In the opposite case, if the similarity result does not fulfil the condition imposed by the threshold, then it will be established that the user has not performed a "coherent" set of movements according to the chosen location pattern. As a result, the user will be not allowed to verify his/her/its identity or, depending on the specific embodiment of the invention, the document will not be approved for its signature, the signature will not be validated, or the transaction will not be allowed for its completion.

In further preferred embodiments of the invention, the method further comprises an optional fourth step of comparing the current location of the user with one or more of the verification request locations, corresponding to one or more locations where the user is allowed to request for a verification of identity or to sign a document. Said step of comparison will preferably comprise determining the similarity between said current locations and one or more of the verification request locations, obtaining a similarity result and comparing it with a predefined threshold result. As with the location patterns, in a preferred embodiment of the invention the verification request locations can be also associated to corresponding timestamps.

If the similarity result fulfils the condition imposed by the threshold, then it will be established that the user is located in a "coherent" location according to the chosen verification request location. Therefore, the user will be allowed to verify his/her/its identity or, depending on the specific embodiment of the invention, the document will be approved for its signature, the signature will be validated, or the transaction will be allowed for its completion.

In the opposite case, if the similarity result does not fulfil the condition imposed by the threshold, then it will be established that the user is not located in a "coherent" location according to the chosen verification request location. As a result, the user will not be allowed to verify his/her/its identity or, depending on the specific preferred embodiment of the invention, the document will not be approved for its signature, the signature will not be validated, or the transaction will not be allowed for its completion.

The last step of the method comprises the acceptance or denial of the operation requested in case that the similarity results obtained for the comparison of the third step and, optionally, for the comparison of the fourth step, fulfil the condition imposed by their respective thresholds. Depending on the specific preferred embodiment of the invention, the operation can be the verification of the user's identity, the signature of a document, the completion of the transaction, etc.

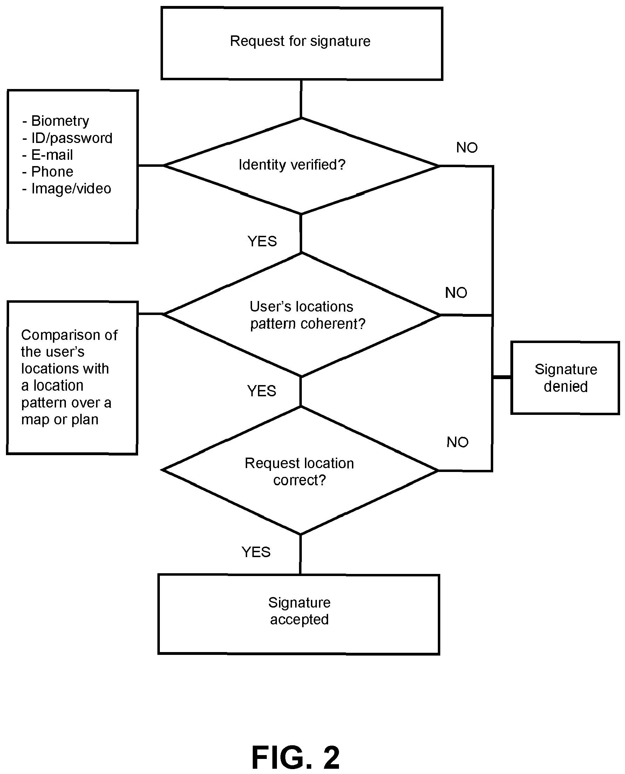

Figure 2 describes the main steps of the method proposed by the present invention, in a second preferred embodiment thereof. Under this embodiment, the steps carried out by the method are essentially the same as in the first embodiment. However, the third step of analysing a plurality of locations of the user and comparing them with one or more location patterns comprises, additionally, comparing said locations with predefined routes or paths based on data associated to a virtual representation of a physical space. For example, the map can be a road map defining possible trajectories made by a vehicle. In other embodiments of the invention, the map can be a city map defining trajectories that can be made by the user on foot, or a building plan defining different locations of a facility. Under these embodiments, the analysis of similarity can also consider geographical or physical constraints in the paths or routes of the user, due for instance to the presence of walls, or to the absence or roads connecting a plurality of given locations. Thus, in case that the user does not comply with the constraints considered, then the similarity result will not fulfil the condition imposed by the threshold and, in consequence, it will be established that the user has not moved under a "coherent" route or path according to the chosen location pattern and the maps or plan criteria applied as additional constraints. As a result, the user will not be allowed to verify his/her/its identity or, depending on the specific embodiment of the invention, the document will not be approved for its signature, the signature will not be validated, or the transaction will not be allowed for its completion.

In a second object of the invention, the method illustrated above can be implemented under different embodiments of a device for identity verification and, optionally, for the secure signature of documents or electronic certificates based on location. Said device comprises means for identifying the location of the device (and, thereby, the location of the user), for example through a GPS connection, a tracked mobile phone network connection, or an Internet, Wi-Fi, or beaconing data connection. Other communication means can be also employed within the scope of the invention, as will be apparent for the skilled person. In different embodiments of the invention, the device can also comprise means for digitally signing an electronic document. Preferably, the device can be a laptop computer, a mobile phone, a tablet device, or a smartwatch device, among other possible options. Under said second object of the invention, every step of the method as described herein is carried out by the device to verify the identity of the user.

In a third object of the invention, the method illustrated above can be implemented under different embodiments of a system for identity verification and, optionally, for the secure signature of documents or electronic certificates based on location. Said system will be described in the following paragraphs.

In a preferred embodiment of the invention, the system is based on a server-client architecture within a communication network, wherein each user operates a client device for verifying his/her/its identity and sending or receiving verification information to/from a server. After verifying the identity and the coherence of the location data of the user, the server can communicate the acceptance or denial of the requested verification. Under this object of the invention, the steps of the method as described herein are carried out at least by a combination of a client device and a server device.

The client device comprises communication means in order to communicate with one or more servers, as well as means for identifying the location of the device (and, thereby, the location of the user), for example through a GPS connection, a tracked mobile phone network connection, or an Internet, Wi-Fi, or beaconing data connection. Other communication means can be also employed within the scope of the invention, as will be apparent for the skilled person. In different embodiments of the invention, the client device can also comprise means for digitally signing an electronic document. More preferably, the client device can be a laptop computer, a mobile phone, a tablet device, or a smartwatch device.

The client device can preferably collect the location data that enable to define the location patterns which form part of the method of the invention. In different embodiments of the invention, the location patterns or their corresponding timestamps can be established by the client device, and/or the comparison between the location data and the location patterns can be carried out by the client device.

The server side of the system of the invention is based on a traditional, cloud or distributed computing server architecture, comprising at least one server connected to a client device through a data network such as, for example, a mobile network, the Internet, a Wide Area Network (WAN) or a Local Area Network (LAN).

The server receives the request for identity verification by the user, through the client device, and ultimately accepts or denies the request, after completing the steps of the method described by the invention. In different embodiments of the invention, the location patterns or their corresponding timestamps can be established by the server in communication with the client devices, and/or the comparison between the location data and the location patterns can be carried out by the client device.

A fourth object of the invention relates to a non-transitory computer readable medium having stored therein instructions, that when executed by at least one device according to the second object of the invention, or a client or server in a system according to the third object of the invention, cause said device or system to perform a method according to the first object of the invention.

A fifth object of the invention relates to a computer-program product comprising a non-transitory computer readable medium according to the fourth object of the invention, having instructions thereon which, when executed by at least one device according to the second object of the invention, or a client or server in a system according to the third object of the invention, cause said device or system to perform a method according to the first object of the invention.

## Claims

1. Location-based method for the electronic identity verification of a user, said method comprising the following steps, in any technically possible order:
- tracking one or more location patterns of the user whose identity is to be verified, wherein each location pattern comprises information for identifying a first plurality of physical locations of the user, and wherein the first plurality of physical locations defines a route or path;
- requesting electronic identity data of the user,
**characterised in that** the method further comprises the following steps:
- analysing a second plurality of physical locations of the user,
- comparing said locations with one or more of the location patterns, determining the similarity between the second plurality of locations and the first plurality of locations defining the location patterns, obtaining a similarity result, and comparing it with a predefined threshold result; and
- verifying the identity of the user by means of the electronic identity data of the user, only when the similarity result fulfils a condition imposed by the threshold result.

2. Method according to the preceding claim, further comprising the steps of:
- requesting an electronic signature of a document and/or an electronic transaction; and
- allowing and/or validating the electronic signature of the document and/or the electronic transaction if the identity of the user is verified.

3. Method according to any of the preceding claims, wherein the location pattern comprises at least one of: geolocation data, mobile phone network tracking data, or Internet, Wi-Fi, and beaconing data.

4. Method according to any of the preceding claims, wherein the location patterns are established by determining recurrent routes or paths followed by the user in a given timeframe.

5. Method according to the preceding claim, further comprising a step of analysing the change in the locations of the user along said routes or paths.

6. Method according to any of the preceding claims, further comprising a step of tracking one or more location patterns with corresponding timestamps related to the physical locations of the user.

7. Method according to the preceding claim, wherein the step of comparing the locations of the user with the locations of one or more of the location patterns further comprises the step of comparing the corresponding timestamps for said locations with the timestamps of one or more of the location patterns.

8. Method according to any of the preceding claims, wherein one or more of the location patterns comprises one or more verification request locations, corresponding to one or more locations and/or timestamps where/when the user is allowed to request for a verification of identity, and
wherein the method further comprises a step of comparing the current location of the user with one or more of the verification request locations.

9. Method according to any of the preceding claims, wherein the request for identity verification is submitted by the user; and/or by a third party.

10. Method according to any of the preceding claims, wherein the step of verifying the identity of the user comprises at least one of: biometric verification, ID and/or password verification, and/or text, voice, image, and video verification.

11. Method according to any of the preceding claims, wherein the step of analysing a plurality of locations of the user and comparing them with one or more location patterns comprises, additionally, comparing said locations with predefined routes or paths based on data associated to a virtual representation of a physical space.

12. Non-transitory computer readable medium having stored therein instructions that, when executed by at least one processor, cause the at least one processor to perform a method according to any of the preceding claims.

13. Device for electronically verifying the identity of a user based on a location of said user, said device comprising:
- a processor;
- means for identifying the location of the device;
- a non-transitory computer readable medium according to the preceding claim.

14. Device according to the preceding claim, further comprising means for digitally signing an electronic document.

15. System for electronically verifying the identity of a user based on his/her/its location, said system comprising:
- at least a client device comprising:
-- a processor;
-- means for identifying the location of the client device;
-- communication means in order to communicate with one or more servers;
- at least a server comprising a processor and connected to the client device through a data network;
wherein at least one of the client device or the server comprises a non-transitory computer readable medium according to claim 12.
